# EUROPEAN PATENT APPLICATION

(11) **EP 2 754 588 A2**
(43) Date of publication of application: **16.07.2014**
(21) Application number: 14151115.4
(22) Date of filing: 14.01.2014
(51) Int. Cl.: B60S 13/00

(54) **Device for moving vehicles and other apparatuses moving on wheels**

(30) Priority: 15.01.2013 FI 20130008
(71) Applicant: Patamaa, Kari, 08700 Lohja (FI)
(72) Inventor: Patamaa, Kari, 08700 Lohja (FI)
(74) Representative: LEITZINGER OY

(57) **Abstract**

A device for moving vehicles and other apparatus moving on wheels. The device comprises a clamping device (1) which can be secured to the wheel (6) of the apparatus to be moved, a shaft (8) of the clamping device, which is located in the central area of the wheel (6) when the clamping device is secured to the wheel (6), an actuator (9), which can be mounted on the shaft (8) and which has a power unit (11; 30, 35) for rotating the shaft (8) and the clamping device (1) with respect to the actuator (9). The actuator (9) comprises a lever arm (13, 33), which is supported on the ground at a distance from the shaft (8) by means of an idler or idlers (14) when the moving device is used. The clamping device (1) comprises arms projecting radially with respect to the shaft (8), the length of at least one of which is adjustable. To the outer ends of the arms (3) are connected gripping clamps (2), which can be pressed against the periphery of the wheel (6) by means of the said length adjustment to secure the moving device to the wheel (6). The free ends of the gripping clamps (2) are bent to an angle conforming to the side of the wheels (6). This ensures reliable securing of the clamping device to the wheel.

## Description

The object of the invention is a device of the type defined in claim 1 for moving vehicles and other apparatus moving on wheels over short distances.

Car repair shops have had considerable problems with moving broken down vehicles inside for repair from outdoors. Although devices have been designed for this purpose, problems have arisen concerning their usability and operation. Most often, the mechanics push the vehicle inside using manpower. At least three men are needed for moving a passenger car and four to five men for moving a van, and in winter or frost conditions even more. A car, forklift truck or tractor can also be used to facilitate the moving.

From the publication WO 2006/131608 is known a moving device, at the ends of the shafts of the clamping device of which are gripping clamps, which are wide in the circumferential direction of the wheel and connected to the shaft by means of a reversal link, in order to position the wide surface parallel to the circumference of the wheel. Although the gripping clamps are provided with nodules to improve the grip, the large contact surface with the surface of the wheel requires a strong compressive force in order for the gripping clamps to be sufficiently embedded in the surface of the wheel. This does not always succeed and the gripping clamps move and may slip sideways off the wheel, whereby the vehicle may be badly damaged. Furthermore, if the gripping clamps are not embedded over their entire thickness in the surface of the wheel, this will cause bouncing when driving. Since only one shaft is adjustable in length, the drive shaft is centric only with a specific wheel diameter. High eccentricity causes additional stresses during moving. An adjustable shaft construction is in addition complex and expensive.

The aim of the invention is to solve the above problems and to provide an improved moving device which can be easily and reliably secured to the wheel and with which one man is able to move the vehicle inside the repair shop quickly, within a few minutes, and the moving does not cause any damage to the vehicle.

This aim is achieved by means of the characteristics disclosed in the accompanying claim 1. Preferred embodiments of the invention are disclosed in the dependent claims.

The device is also applicable to moving other apparatus moving on wheels in garages, warehouses, industrial halls, etc.

The invention is illustrated by means of the following drawings:

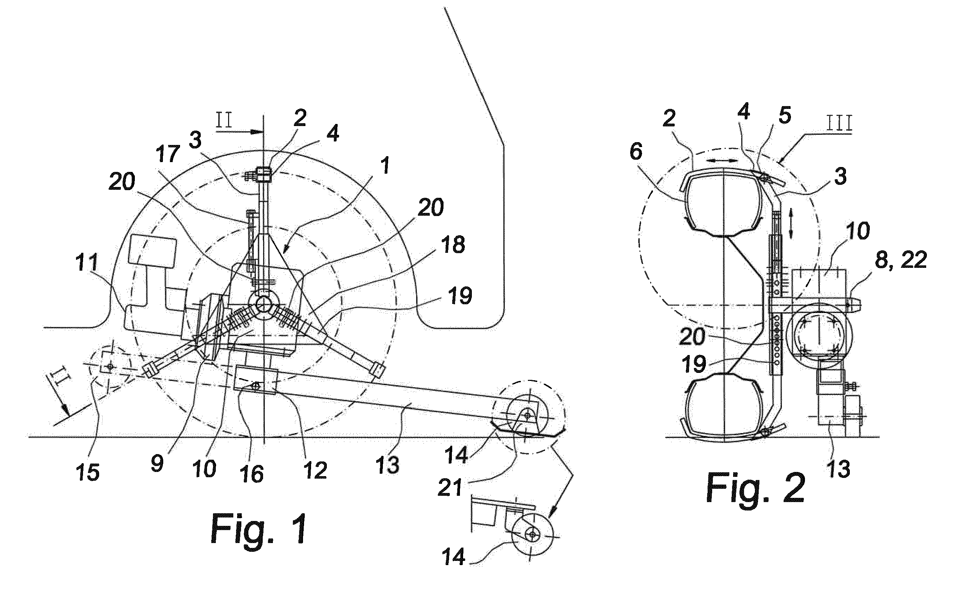

- Figure 1: shows the device according to the invention when mounted on the left rear wheel of a vehicle.
- Figure 2: shows the same device as a sectional view along line II.

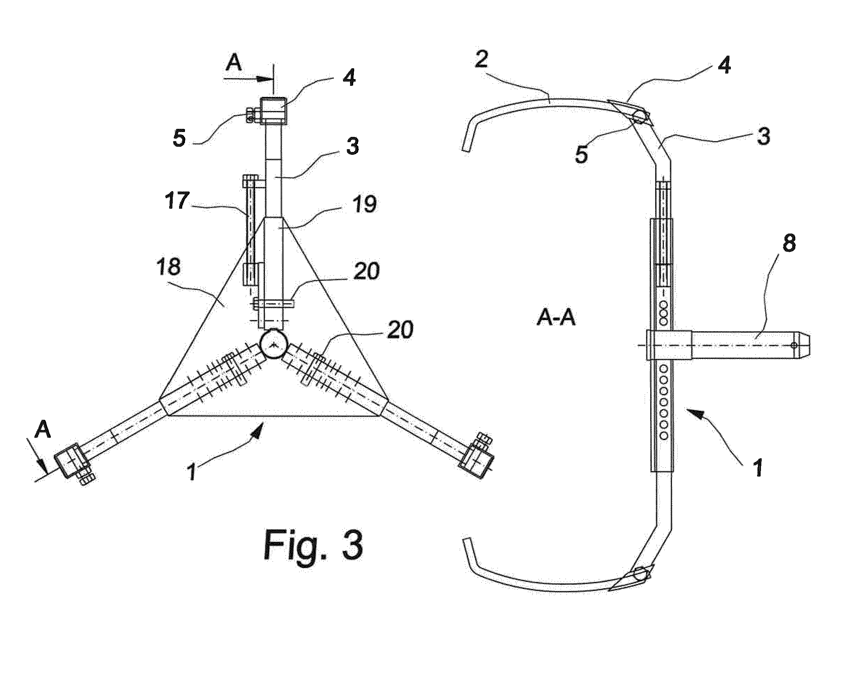

- Figure 3: shows the clamping device 1 without the actuator 9 mounted on the shaft 8.
- Figure 4: shows an alternative construction of the clamping device 1.
- Figure 5: shows an alternative embodiment of the actuator.
- Figure 6: shows separately the actuator 9 according to the embodiment of Figure 1.
- Figure 7: shows the free body diagram of the device to illustrate the conditions of equilibrium.

The device is secured to the wheel 6 by means of a clamping device 1 which most often has three radially moving gripping clamps 2. The gripping clamps 2 are fixed inside radially adjustable arms 3 and tubes 4 welded at their ends in such a way that they can be locked with a screw 5 in accordance with the width of the tyre. The gripping clamps 2 and tubes 4 preferably have a rectangular cross-section. The gripping clamps 2 are pressed against the periphery of the wheel 6 by radially tightening either one or more arms 3 with a screw 17. The nut part of the screw 17 is secured with a pin 20 to the tube 19. The arms 3 are located inside tubes 19 fixed radially on a triangular frame plate 18. The radial position of the arms 3 and the gripping clamps 2 is adjusted by means of the holes in the tubes 19 and the arm 3 and a locking pin 20 to correspond to the diameter of the wheel.

The shaft 8 of the clamping device 1 settles in the central area of the wheel 6, perpendicularly to the plane of the wheel. The shaft 8 thus settles essentially on the extension of the wheel 6 shaft or in its vicinity when the clamping device is secured to the wheel 6. The actuator 9 can be mounted on the shaft 8. The actuator 9 comprises a motor 11 for rotating the shaft 8 and the clamping device 1 with respect to the actuator 9. When the moving device is used, the lever arm 13 of the actuator 9 is supported on the ground at a distance from the shaft 8 by means of an idler or idlers 14. If necessary, a ski 21 can be used for additional support. The arms 3 of the clamping device project radially with respect to the shaft 8. The length of at least one arm 3 is adjustable in order that the gripping clamps 2 connected to the outer ends of the arms 3 can be pressed against the periphery of the wheel 6 to secure the moving device to the wheel 6.

Above is described a device, wherein the clamping device 1 comprises a shaft 8, to which the sleeve shaft in the gear is mounted, that is, the clamping device is male and the actuator is female. It is obvious to a person skilled in the art that there may be a sleeve in the clamping device instead of a shaft 8, to which sleeve the projecting shaft of the actuator in the gear is similarly mounted, that is, the clamping device is female and the actuator is male.

Moving heavy trucks with an actuator of the type described above requires high torque strength of the gear, thus making it heavy and expensive. It would, therefore, be preferable to use a battery-driven or a combustion engine driven pneumatic or hydraulic system, the regulating units of which, which are bellows or cylinders, use a device similar to a two-sided ratchet wrench. Most often, pressure is guided by means of electrically controlled valves to the bellows and to the regulating unit controlling the direction of pull of the ratchet in such a way that the vehicle moves in the desired direction.

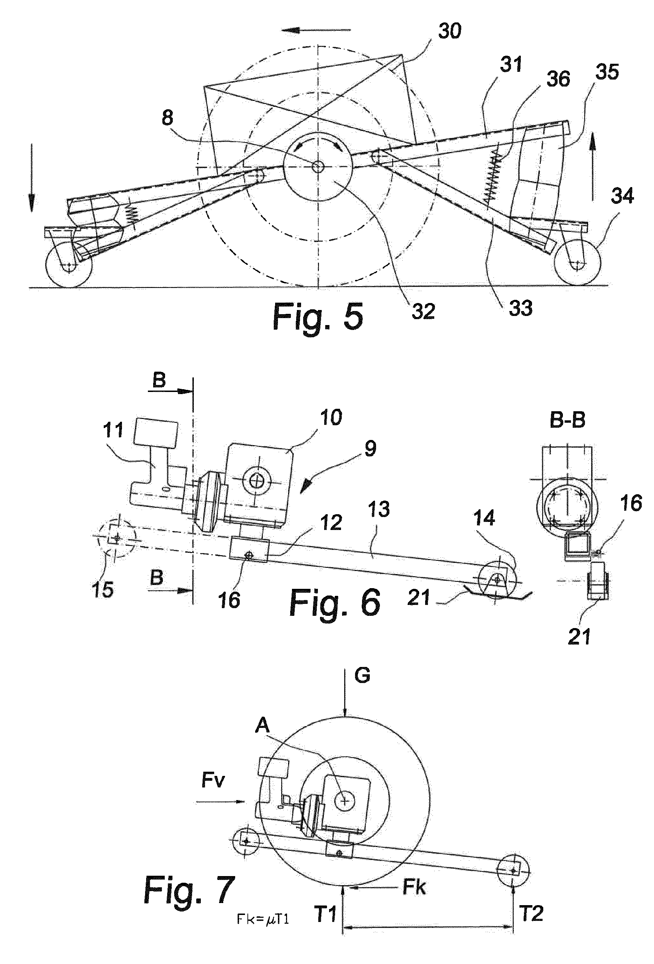

The structure in principle of an actuator of this type appears from Figure 5, which shows the pneumatic alternative. The device is mounted on the shaft 8 of the clamping device 1. Part 30 is a pneumatic aggregate. Part 31 is a frame tube, in the centre of which is a ratchet 32, the pulling direction of which can be changed. The idlers 34 are secured to the ends of joint levers 33 pivoted to the frame; the bellow cylinder 35 is located between the frame tube 31 and the joint lever 33. A spring 36 ensures the return of the joint lever 33. This structure makes possible a lighter construction which one man is able to move on the idlers 34.

In order to ensure reliable securing of the clamping device to the wheel, the free ends of the gripping clamps 2 are bent to an angle conforming to the side of the wheels 6. To be able to position the clamping device easily and reliably in place and the shaft 8 in as centric a position as possible, it is preferable for the length of two arms to be steplessly adjustable, and the length of one arm 3 to be steplessly adjustable by an adjustment screw 17, by means of which the gripping clamps 2 can be pressed against the periphery of the wheel 6. In addition, in order for the gripping clamps to be embedded in the periphery of the wheel essentially to the extent of their thickness, it is preferable that the width of the gripping clamps 2 in the peripheral direction of the wheel 6 is at most 20% of the length of the gripping clamps 2. Most preferably, the width of a gripping clamp is less than 15% of its length.

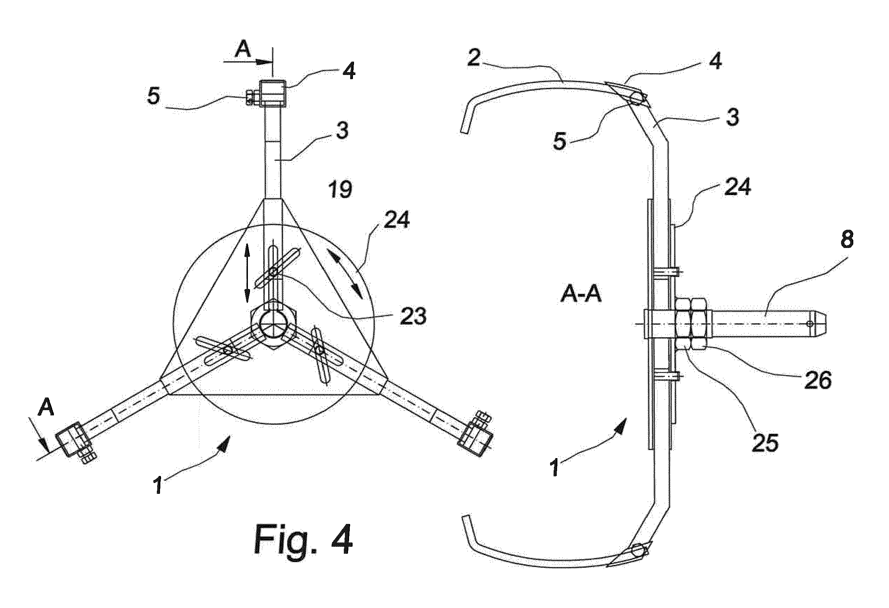

Figure 4 shows an alternative adjustment of the arms 3 and the gripping clamps 2. To the arms 3 are fixed pins 23 which are moved by the slots in a round plate 24 mounted on the shaft 8 when the plate is rotated, thus moving the arms 3. The tubes 19 comprise elongated holes for the movement of the pins 23. The round plate 24 is rotated by a nut 25 welded to it and locked by nut 26. The device can be secured to any wheel of the vehicle.

The actuator 9 shown in Figure 6 is comprised of a reduction gear 10 and a motor 11, which is most often an electric motor, and of a lever arm 13 fixed to the reduction gear 10 or motor 11 either directly or by means of a sliding sleeve 12, the lever arm being supported on the ground by means of an idler or idlers 14 and 15. The idler is preferably a self-steering, turning wheel.

The length (a) of the lever arm 13 can be adjusted in the sliding sleeve 12. The sliding sleeve 12 comprises a locking screw 16 for locking the lever arm 13. The lever arm 13 may be two-sided, with idlers 14 and 15, or one-sided, in which case, when driving the vehicle in one direction, the lever arm 13 turns to the other side, and when the idler 14 reaches the ground, the vehicle starts to move, which is shown in the Figures by means of a dot-and-dash line.

The actuator 9 is mounted on the shaft 8 of the clamping device 1 and locked with a ring pin 22. By increasing the length (a) of the lever arm, the force lifting the wheel decreases, which is significant when driving in slippery conditions (see Figure 7). On the basis of Figure 7 can be written the following equations of equilibrium:
↑ -G+T1+T2 =0 → T1=G-T2
← -Fv+FK=0 → Fk=Fv=µT1=µ(G-T2)
MA +Fkxr-T2xa=0 → Fkxr=T2xa

In other words, if a is double, the supporting force T2, which is the force lifting the vehicle wheel, decreases to a half.

In the equations:
- T1 and T2: are supporting forces and G is gravity
- a: is the lever arm between the supporting forces
- Fk: = µT1
- µ: is the friction coefficient
- MA: is the torque turning the wheel.

The motor is preferably battery-driven and most conveniently controlled from the driver's seat by radio control. Cable control is also possible. The control cable with the control button is taken inside the vehicle through the front door to the driver's seat.

The same device is also applicable to moving trucks and trailers as well as apparatus moving on rails.

## Claims

1. A device for moving vehicles and other apparatus moving on wheels, comprising a clamping device (1) which can be secured to the wheel (6) of the apparatus to be moved, a shaft (8) of the clamping device, which is located in the central area of the wheel (6) when the clamping device is secured to the wheel (6), an actuator (9), which can be mounted on the shaft (8) and which has a power unit (11; 30, 35) for rotating the shaft (8) and the clamping device (1) with respect to the actuator (9), and the lever arm (13, 33) of the actuator (9), which is supported on the ground at a distance from the shaft (8) by means of an idler or idlers (14) when the moving device is used, the clamping device (1) comprising arms projecting radially with respect to the shaft (8), the length of at least one of which is adjustable, gripping clamps (2) connected to the outer ends of the arms (3), which can be pressed against the periphery of the wheel (6) by means of the said length adjustment to secure the moving device to the wheel (6), **characterised in that** the free ends of the gripping clamps (2) are bent to an angle conforming to the side of the wheels (6).

2. A moving device as claimed in claim 1, **characterised in that** the width of the gripping clamps (2) in the peripheral direction of the wheel (6) is at most 20% of the length of the gripping clamps (2).

3. A moving device as claimed in claim 1 or 2, wherein the arms (3) are structurally telescopic and the length of all arms (3) is adjustable, **characterised in that** the length of two arms is stepwise adjustable, and the length of one arm (3) is steplessly adjustable by an adjustment screw (17), by means of which the gripping clamps (2) can be pressed against the periphery of the wheel (6).

4. A moving device as claimed in any of the claims 1 to 3, **characterised in that** at the ends of the arms (3) are tubes (4), into which the securing ends of the gripping clamps (2) can be pushed in order to adjust the length of the gripping clamps in accordance with the width of the wheel (6).

5. A moving device as claimed in any of the claims 1 to 3, **characterised in that** the length of the lever arm (13) is adjustable, and that the lever arm (13) is two-sided in such a way that there are idlers (14, 15) at both of its ends.
